(19) Europäisches Patentamt
European Patent Office
Office européen des brevets

(11) **EP 2 153 172 B1**

(12) **EUROPÄISCHE PATENTSCHRIFT**

(45) Veröffentlichungstag und Bekanntmachung des Hinweises auf die Patenterteilung:
**19.04.2017 Patentblatt 2017/16**

(21) Anmeldenummer: **08759551.8**

(22) Anmeldetag: **13.05.2008**

(51) Int Cl.:
***G01C 21/30*** *(2006.01)*

(86) Internationale Anmeldenummer:
**PCT/EP2008/055850**

(87) Internationale Veröffentlichungsnummer:
**WO 2008/145509 (04.12.2008 Gazette 2008/49)**

(54) **MAP MATCHING FÜR SICHERHEITSANWENDUNGEN**

MAP MATCHING FOR SECURITY APPLICATIONS

CORRESPONDANCE CARTOGRAPHIQUE POUR APPLICATIONS DE SÉCURITÉ

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **29.05.2007 DE 102007025065**
**13.05.2008 DE 102008023242**

(43) Veröffentlichungstag der Anmeldung:
**17.02.2010 Patentblatt 2010/07**

(73) Patentinhaber: **Continental Teves AG & Co. oHG**
**60488 Frankfurt (DE)**

(72) Erfinder:
• **STÄHLIN, Ulrich**
**65760 Eschborn (DE)**

• **MINOVES, Martin**
**64287 Darmstadt (DE)**
• **KEIL, Anselm**
**65719 Hofheim (DE)**

(74) Vertreter: **Wagner, Philipp et al**
**Conti Temic microelectronic GmbH**
**Intellectual Property**
**Sieboldstraße 19**
**90411 Nürnberg (DE)**

(56) Entgegenhaltungen:
EP-A- 0 522 862    EP-A- 0 598 518
WO-A-2005/120879    DE-A1- 4 432 208
US-A1- 2006 047 423    US-A1- 2006 082 495

**Beschreibung**

Gebiet der Erfindung:

Die Erfindung betrifft die Berechnung von Positionsdaten eines Objektes. Insbesondere betrifft die Erfindung eine Vorrichtung zum Abgleich einer gemessenen Position eines Objektes mit Information einer digitalen Karte, ein System, die Verwendung einer Vorrichtung, ein Fahrzeug, ein Verfahren, ein Programmelement sowie ein computerlesbares Medium.

Technologischer Hintergrund:

Sicherheitsrelevante Fahrzeugassistenzsysteme müssen in der Lage sein, gefährliche Situationen vorauszusagen, die zu einem Verlust über die Fahrzeugkontrolle oder zu einer Kollision führen können. Wird eine solche Situation rechtzeitig vorausgesagt, so kann diese u.U. vermieden werden, und zwar autonom z.B. durch Abbremsen des Fahrzeugs, oder durch Warnung des Fahrers über diese bevorstehende Situation mittel eines Warnsystems.

Bisher wurde diese Vorhersagemöglichkeit durch verschiedene Arten von Sensoren, Radarsystemen oder Kameras erreicht, die jedoch alle auf das direkte Sichtfeld des Fahrzeugs beschränkt sind. Das bedeutet, dass sie keine weiteren Informationen darüber liefern können, was beispielsweise nach einer Kurve geschieht.

Mit Hilfe von Kartendaten ist es möglich, diese Voraussagen zu verbessern und z.B. vorhersagen zu können, wie die Straße nach der nächsten Kurve verläuft.

Um die Informationen einer Karte zu verwenden, muss die aktuelle Position bekannt sein. Diese aktuelle Position kann mit verschiedenen Mitteln erkannt werden, z.B. mit einem GPS-Empfänger, der eine preisgünstige und globale Lösung sein kann. Das GPS oder ein anderes Positioniersystem weist einen Fehler auf, der es nicht immer möglich macht, eine Position genau in einer Straße anzugeben. Außerdem kann eine Karte auch immer einige Genauigkeitsfehler und Abweichungen zu der wirklichen Kartographie aufweisen, wodurch die Positionsermittlung direkt in einer Straße erschwert oder gar unmöglich ist.

In diesem Zusammenhang offenbart die US2006/0047423 A1 ein Navigationssystem und ein Verfahren zum Erkennen eines Abweichens eines Fahrzeugs von einer durch das Navigationssystem vorgegebenen Route. Dazu wird eine Vorrichtung beschrieben, welche einen GPS-Sensor und einen Koppelnavigationssensor umfasst. Der GPS-Sensor bestimmt zunächst eine Positions- und Zeitinformation aus GPS-Signalen während der Trägheitssensor eine relative Position basierend auf zuvor bestimmten Positionsinformationen bestimmt. Mittels eines Filtermoduls wird aus den Informationen des GPS-Sensors und des Koppelnavigationssensors eine gegenwärtige Position des Fahrzeugs bestimmt. Die mittels des Filters bestimmten Positionsdaten werden von einer Map-Matching-Einheit dazu verwendet, einen Abgleich mit einer digitalen Karte auszuführen und eine Übereinstimmungswahrscheinlichkeit zwischen der gegenwärtige Position und der mittels Map-Matching bestimmten Position zu erzeugen. Die Übereinstimmungswahrscheinlichkeit wird dann an eine Einheit zum Erkennen einer Abweichung und an eine Einheit zum Folgen der Fahrtroute übertragen.

Die EP 0 522 862 A1 beschreibt ein GPS-Navigationssystem mit selektiver Positions-Offset-Korrektur. Das Navigationssystem ist zur Verwendung in einem beweglichen Objekt ausgelegt und umfasst eine GPS-Positionierungseinrichtung zum Empfangen von GPS-Signalen und Ausgeben von ersten Positionsdaten sowie eine automatische Positionierungseinrichtung zur Ermittlung der derzeitigen Position und zur Ausgabe von zweiten Positionsdaten. Weiterhin umfasst das Navigationssystem eine Ermittlungseinrichtung zum Vergleichen der ersten und zweiten Positionsdaten und zum Ermitteln eines Unterschieds zwischen den ersten und zweiten Positionsdaten sowie eine Korrektureinrichtung zum Addieren eines Offset-Werts zu den ersten Positionsdaten, falls der Unterschied zwischen den ersten und zweiten Positionsdaten größer oder gleich einem vorbestimmten Wert ist. Die automatische Positionierungseinrichtung umfasst gemäß der EP 0 522 862 A1 einen Ortungssensor, einen Geschwindigkeitssensor und eine Positionsberechnungseinheit zur Ausgabe von Positionsdaten auf Basis dieser Sensoren. Die Positionsberechnungseinheit umfasst ihrerseits einen Mikrocomputer zum Lesen von Kartendaten eines CD-ROM-Laufwerks basierend auf den ersten und zweiten Positionsdaten und zum Anpassen der Positionsdaten an die Kartendaten mithilfe einer Map-Matching-Einheit.

Aus der DE 44 32 208 A1 ist ein Navigationsverfahren mithilfe einer vektorisierten Geländekarte bekannt. Ausgehend von einem Ausgansstandort eines Fahrzeugs und von Werten, die von einem Wegstreckenmesser, einem Kompass und einem GPS-Navigationssystem geliefert werden, wird der Standort des Fahrzeugs errechnet und auf eine vektorisierte elektronische Karte übertragen, um einen Wegabschnitt auszuwählen, der den wahrscheinlichsten Standort des Fahrzeugs enthält. Zur Errechnung des Standorts wird ein Kalman-Filter verwendet, das signifikante Daten einer Unbestimmtheitsfläche erstellt, die den neuen errechneten Standort umgibt. Die vom Kalman-Filter erzeugten signifikanten Daten werden als Eingangssignal an Vergleichsmittel der vektorisierten Karte angelegt, welche nun den Standort von innerhalb der Unbestimmtheitsfläche gelegenen Wegabschnitten bestimmen, die potentiell den realen Standort des Fahrzeugs enthalten können.

Zusammenfassung der Erfindung

Es ist eine Aufgabe der Erfindung, einen verbesserten Abgleich einer gemessenen Position eines Objektes mit Information einer digitalen Karte bereitzustellen.

Es sind eine Vorrichtung zum Abgleich einer gemessenen Position eines Objektes mit Information einer digitalen Karte, ein System, eine Verwendung einer Vorrichtung, ein Fahrzeug, ein Verfahren, ein Programmelement, sowie ein computerlesbares Medium gemäß den Merkmalen der unabhängigen Ansprüche angegeben. Weiterbildungen der Erfindung ergeben sich aus den abhängigen Ansprüchen. Die beschriebenen Ausführungsbeispiele betreffen gleichermaßen die Vorrichtung, das System, die Verwendung, das Fahrzeug, das Verfahren, das Programmelement und das computerlesbare Medium.

Gemäß einem Ausführungsbeispiel der Erfindung ist eine Vorrichtung zum Abgleich einer gemessenen Position eines Objektes (beispielsweise eines Fahrzeuges) mit Information einer digitalen Karte angegeben, wobei die Vorrichtung eine Recheneinheit aufweist. Dabei ist die Recheneinheit zu einer ersten Auswahl von Kartographieelementen der Karte auf Basis der gemessenen Position und auf Basis eines vordefinierten Fehlers ausgeführt. Weiterhin ist die Recheneinheit zur Bereitstellung der ausgewählten Kartographieelemente an eine erste und eine zweite Untereinheit ausgeführt.

Weiterhin kann die erste Auswahl zusätzlich oder ersetzend auch auf Basis von Koordinaten der Kartographieelemente durch die Recheneinheit erfolgen.

Dabei sei weiterhin angemerkt, dass im Kontext der Erfindung der Begriff "Abgleich" gleichzusetzen ist mit dem Begriff des "map matching" und umgekehrt.

Dabei ist im Folgenden unter dem Begriff "Kartographieelement" jedes Element einer Karte zu verstehen, das mit Hilfe der vier Grundelemente Knoten, Segment, Weg oder geschlossener Weg dargestellt werden kann. Dabei ist ein Knoten ein Punkt im Raum, der beispielsweise GPS-Koordinaten wie Breite und Höhe aufweist. Ein Segment ist eine Linie, die zwei Knoten miteinander verbindet und ein Weg ist ein Satz gruppierter Segmente.

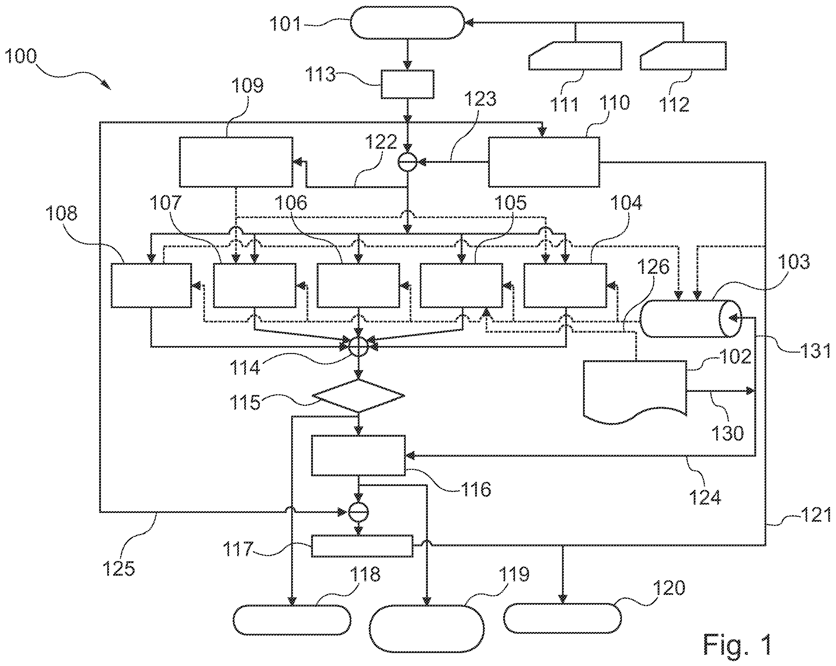

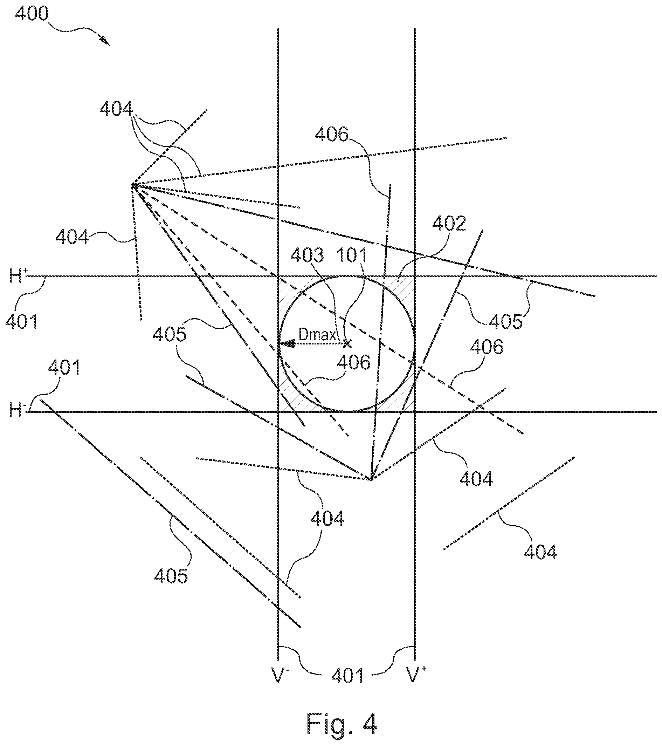

Mit anderen Worten wird durch dieses Ausführungsbeispiel der Erfindung ein Schnellausschlussfilter angegeben, der diejenigen Kartographieelemente mit ihrer gegebenen Position auswählt, die ein vordefiniertes Fehlerkriterium erfüllen. Dieses Kriterium kann beispielsweise rechnerisch durch einen maximalen Abstand gegeben sein, der graphisch durch einen Kreis mit Radius des maximalen Abstandes um die gemessene Position dargestellt wird. Dabei kann beispielsweise berechnet werden, ob sich die Segmente nach verschiedenen Formeln innerhalb des maximalen Fehlers befinden. Diese Filtermethode zum schnellen Ausschluss von Kartographieelementen wird beispielsweise auch in Fig. 1 und Fig. 4 verdeutlicht.

Durch diese Selektion derjenigen Kartographieelemente, die für einen nachfolgenden map matching Prozess relevant sind, kann schneller und mit weniger Rechenleistung ein map matching erfolgen. Ziel eines darauf folgenden map matching Verfahrens ist es, anhand der Positionsbestimmung eines beispielsweise GPS, welches einen spezifischen Fehler aufweist, zwischen möglichen Punkten einer Karte zu entscheiden, auf welchen Punkt sich die Positionsbestimmung bezieht. In bestimmten Fällen muss beispielsweise nach Empfang einer GPS-Position entschieden werden, in welcher Straße sich der GPS-Empfänger befindet. Dabei muss zunächst analysiert werden, warum ein Abgleich oder ein map matching und vor allem mit welcher Methode bzw. mit welchem map matching Verfahren dies geschehen muss. Daraufhin wird die beste Methode extrahiert und die Recheneinheiten werden daraufhin bewertet. Zum Beispiel kann im Falle eines Fahrzeuges die gemessene Position, die auf Grund verschiedenster Fehlerquellen nicht exakt sein kann mit Kartendaten angepasst werden. Dabei können die Kartendaten ebenso fehlerbehaftet sein. Daher können beispielsweise die zwei nächst gelegenen Straßen aus einer Karten mit vielen Straßen, die jedoch entfernter liegen ausgewählt werden. Dabei sind in diesem Falle Straßen als ein Segment bzw. Kartographieelement anzusehen. Eine Anschließende Berechnung der Wahrscheinlichkeit auf Basis des Fahrzeugzustandes, in welcher der beiden Straßen sich das Fahrzeug tatsächlich befindet kann mittels verschiedener Methoden parallel berechnet und verglichen werden.

Dabei sei weiterhin angemerkt, dass die Vorrichtung und die Recheneinheit mit mathematischen Verfahren oder Algorithmen arbeiten kann, welche beispielsweise auf einer CPU ausgeführt werden können. Aufgrund dieser ersten Auswahl von Kartographieelementen erfolgt somit eine Reduktion und Eliminierung unnötiger Kartographieelemente bzw. Segmente aus der digitalen Karte, wodurch beispielsweise anschließend ein vereinfachter Abgleich stattfinden kann.

Ebenso sei darauf hingewiesen, dass die Recheneinheit weiterhin derart ausgeführt sein kann, dass sie die ausgewählten Kartographieelemente beliebig vielen weiteren Unterrecheneinheiten zur Verfügung stellt. Die Verwendung nur einer Unterrecheneinheit ist natürlich auch möglich.

Dabei kann der vordefinierte Fehler beispielsweise ein Fehlerwert sein, der auf einer Fehlerverteilung eines GPS-Systems basiert. Die Fehlerverteilung eines GPS-Systems entspricht einer Normalverteilung, aus welcher ein vordefinierter Fehler abgeleitet werden kann. Dieser Fehlerwert kann aber auch iterativ nach einzelnen Abgleichen angepasst und optimiert werden.

Mit anderen Worten eliminiert die Vorrichtung durch die erste Auswahl die Anzahl der Daten zu den Kartographieelementen derart, dass sich eine anschließende Verbesserung oder Überprüfung der gemessenen Position nur auf eine kleine Karte konzentriert und nur noch die relevanten Segmente mit ihren Positionen berechnen und bewerten muss. Mit anderen Worten wird die Information der Karte für eine komplexe Nachbearbeitung vorgefiltert. Dies kann eine wesentlich Einsparung von Zeit und Rechenleistung bedeuten.

Dabei kann weiterhin vorgesehen sein, dass der Wert des vordefinierten Fehlers adaptiv an die Situation angepasst wird. Das heißt die Vorrichtung vergrößert den maximalen Fehlerkreis, wenn innerhalb des abgedeckten Bereichs überhaupt kein map matching durchgeführt werden kann. Ist das map matching möglich, verkleinert das System den maximalen Fehlerkreis bis zu dem theoretisch vordefinierten Wert.

Dabei kann die Auswahl der relevanten Kartographieelemente durch die Vorrichtung dazu benutzt werden, um anschließend eine gleichzeitige Abwägung und Bewertung der verschiedenen Kartographieelemente durch verschiedene Module oder durch verschiedene Unterrecheneinheiten durchzuführen. Dabei könne diese Unterrecheinheiten als unabhängige map matching Algorithmen angesehen werden, die gleichzeitig, parallel und unabhängig voneinander arbeiten können. Ohne die erste Auswahl durch die Vorrichtung wäre ein Abgleich einer gemessenen Position eines Objektes mit Informationen der digitalen Karte weitaus komplexer und könnte nur schwer in Echtzeit ausgeführt werden.

Dabei kann die gemessene Position auch ein nicht aktueller Datensatz sein und auch eine zumindest Teilberechnung der gemessenen Position aus einem älteren Positionsdatensatz ist möglich. Eine Navigationsfähigkeit ist somit kein wesentlicher Bestandteil dieses Ausführungsbeispiels. Weiterhin kann nach einem Abgleich die neue Position als Feedback Information erneut der Vorrichtung und/oder der Recheneinheit zugeführt werden. Dies entspricht einer Feedbackschleife zum optimierten map matching.

Dazu kann beispielsweise eine Positionsbestimmungseinheit wie eine GPS-Einheit in dem Objekt verwendet werden. Dabei ist darauf hinzuweisen, dass im Kontext der vorliegenden Erfindung GPS stellvertretend für sämtliche globale Navigationssatellitensysteme (GNSS) steht, wie zum Beispiel GPS, Galileo, GLONASS (Russland), KOMPASS (China), IRNSS (Indien), ...

Unter dem Begriff "digitale Karten" sind auch Karten für fortschrittliche Fahrerassistenzsysteme (Advanced Driver Assistant System, ADAS) zu verstehen, ohne dass eine Navigation stattfindet. Dabei kann das verwendete digitale Kartenformat nach Kriterien und Parametern ausgesucht und möglicherweise verändert werden, um dieses und jedes andere Ausführungsbeispiel der Erfindung zu ermöglichen. Eine Anpassung des Formats an die verwendeten Algorithmen ist möglich. Beispielsweise kann ein Format verwendet oder erzeugt werden, dass die erfindungsgemäße Auswahl von Kartographieelementen und die parallele Berechung von Werten einzelner Unterrecheneinheiten verbessert wird.

Dabei können die Unterrecheneinheiten auch physikalisch in der Recheneinheit enthalten sein.

Gemäß einem weiteren Ausführungsbeispiel der Erfindung weist die Vorrichtung weiterhin die erste und die zweite Unterrecheneinheit auf, wobei die erste Unterrecheneinheit zur Berechnung eines ersten Wertes für jedes ausgewählte Kartographieelement mittels eines ersten Verfahrens bzw. einer ersten Methode ausgeführt ist. Weiterhin ist die zweite Unterrecheneinheit zur Berechnung eines zweiten Wertes für jedes ausgewählte Kartographieelement mittels eines zweiten Verfahrens bzw. einer zweiten Methode ausgeführt, wobei die ersten und die zweiten Werte in der gleichen Maßeinheit berechnet sind bzw. auf die gleiche Maßeinheit umgerechnet werden.

Mit anderen Worten sind die Unterrecheneinheiten und die verwendeten Methoden derart ausgeführt, dass eine Umrechnung von jeweils spezifischen physikalischen Einheiten der Unterrecheneinheit auf eine vorgegebene Basiseinheit, die gleiche Maßeinheit erfolgt. Sollten Algorithmen zur Berechnung der Werte verwendet werden, so ist eine Auswahl der Algorithmen derart nötig, dass stets die vordefinierte Maßeinheit für jede verwendete Unterrecheneinheit erfolgt. Dabei kann die Wahl der gleichen Maßeinheit durch die Vorrichtung, durch die Recheneinheit, also den Schnellausschlussfilter, oder auch durch einen Benutzer vorgegeben werden.

Die Berechnung der Werte in den verschiedenen Unterrecheneinheiten in einer gemeinsamen Einheit ermöglicht den nachfolgenden Direktvergleich von Werten der einzelnen Kartographieelemente. Dies ermöglicht eine Kombination verschiedener Berechnungsmethoden und liefert somit mehr Information zur Entscheidung über einen Abgleich. Dies minimiert einen möglichen Fehler des Abgleichs.

Mit anderen Worten werden beispielsweise für zwei Straßen mit ihren Entfernungen zur gemessenen Position und mit ihren Ausrichtungen im Vergleich zum aktuellen Positions- und Bewegungszustandes des Objektes durch ein Entfernungsmodul und ein Winkelmodul Werte berechnet, welchen eine Wahrscheinlichkeit zugeordnet werden kann. Dieser Wert gibt an, mit welcher Wahrscheinlichkeit es sich bei der realen Position des Fahrzeuges um die Position des jeweiligen Kartographieelements handelt. Durch eine zusätzliche Bewertung oder ein Tuning mittels eines Tuning Parameters kann ebenso die Gewichtung einer Unterrecheneinheit und der darin berechneten Werte erfolgen.

Der map matching Algorithmus wendet somit verschiedene Analysemethoden auf die ausgewählten Kartographieelemente an und wertet dann die Ergebnisse aller Methoden aus. Um die Werte der unterschiedlichen Methoden vergleichen zu können, müssen die normalerweise unterschiedlichen Einheiten umgerechnet oder transformiert werden.

Mit anderen Worten: Unterschiedliche Faktoren bewerten unterschiedliche Eingabeparameter, weshalb deren Ergebnis in unterschiedlichen Einheiten ausgedrückt werden kann. Beispielsweise gibt ein Entfernungsmodul, was als erste Unterrecheneinheit angesehen werden kann, einen Abstand an, wohingegen ein Winkelmodul, was als zweite Recheneinheit angesehen werden kann, einen Winkel angibt. Da Winkel mit Abständen nicht vergleichbar sind, gibt die erfindungsgemäße Vorrichtung eine Möglichkeit an, Maßeinheiten zu definieren und eine Umwandlung für die einzelnen Einheiten der einzelnen Unterrecheneinheiten bereitzustellen.

Gemäß einem weiteren Ausführungsbeispiel der Erfindung ist die Vorrichtung weiterhin zur Addition des ersten und des zweiten Wertes jedes ausgewählten Kartographieelements zu einem jeweiligen Endwert ausgeführt.

Dabei ist natürlich nicht ausgeschlossen, dass die Ausführbarkeit der Addition auch im Falle von weiteren Unterrecheneinheiten die weitere Werte zur Verfügung stellen, gegeben ist.

Auf diese Art und Weise sammeln die Kartographieelemente bestimmte Punktzahlen von den einzelnen Unterrecheneinheiten oder Modulen. Dabei entsprechen den Punktzahlen jeweils Wahrscheinlichkeiten der Kartographieelemente, die tatsächliche Position des Objekts aufzuweisen. Wobei nach einer Addition der einzelnen Werte eines Kartographieelements zu einem Endwert eine Reihenfolge auf Basis dieser Wahrscheinlichkeiten der Kartographieelemente erstellt wird. Diese Reihenfolge wird für den Abgleich bzw. das map matching herangezogen.

Gemäß einem weiteren Ausführungsbeispiel der Erfindung ist die Vorrichtung weiterhin zu einer Bewertung der ersten Unterrecheneinheit und einer Bewertung der zweiten Unterrecheneinheit ausgeführt, was zu einer entsprechenden Gewichtung der beiden Werte jedes ausgewählten Kartographieelements führt.

Dabei kann die Bewertung der Unterrecheneinheiten durch die Recheneinheit gesteuert sein und erfolgen, aber auch eine Bewertung durch den Benutzer der Vorrichtung oder auch eine automatische Bewertung auf Basis von zur Verfügung gestellten Messdaten ist möglich.

Dabei können alle Unterrecheneinheiten bzw. Module als eigenständige map matching Algorithmen angesehen werden. Durch die Bewertung bzw. durch Modifizierung eines Tuning-Parameters ist es möglich, nur ein Modul für das Map matching zu verwenden und dieses trotzdem auszuführen. Hierzu können beispielsweise die Einflüsse der anderen Unterrecheneinheiten über die Tuning-Parameter bzw. die Gewichtung auf Null gesetzt werden. So ist diese Vorrichtung in der Lage, ein map matching als Kombination aus verschiedenen Unterrecheneinheiten oder verschiedenen map matching Algorithmen zur Verfügung zu stellen. Sollte eine bestimmte Kartensituation vorliegen, kann diejenige Kombination der Unterrecheneinheiten mit entsprechender Bewertung erfolgen, bei der die Entscheidungsmethode optimal ist.

Gemäß einem weiteren Ausführungsbeispiel der Erfindung ist die Vorrichtung weiterhin zu einer zweiten Auswahl eines Zielkartographieelements aus den ausgewählten Kartographieelementen auf Basis der Endwerte ausgeführt. Weiterhin ist die Vorrichtung derart ausgeführt, dass der Abgleich auf Basis des Zielkartographieelements erfolgt.

Mit anderen Worten kann somit nach einer Berechnung aller relevanten und vorher bereits ausgewählten Kartographieelemente in den verschiedenen Unterrecheneinheiten die Auswahl des Zielkartographieelements stattfinden. Das Zielkartographieelement ist dabei dasjenige Kartographieelement, welches aufgrund der erstellten Reihenfolge und eventuell erfolgter Bewertung am wahrscheinlichsten ist.

Daraufhin kann die gemessene Position des Objektes durch die Position des Zielkartographieelements ersetzt werden. Somit ist die Position des Zielkartographieelements die neue angepasste Position des Objekts.

Sollte beispielsweise die gemessene GPS-Position eines Fahrzeuges als GPS-Daten angegeben werden, die in Realität einem Fluss entsprechen, so kann durch einen anschließenden Abgleich diejenige Position beispielsweise einer nächstliegenden Straße als Zielkartographieelement herausgefunden werden. Dabei ist das Zielkartographieelement dasjenige Kartographieelement, das zuerst in einer Auswahl die Bedingungen eines Fehlerkriteriums erfüllt hat und in einem zweiten berechnenden Algorithmusschritt die höchste Wahrscheinlichkeit aufweist.

Gemäß einem weiteren Ausführungsbeispiel der Erfindung weist die Vorrichtung einen ersten Filter auf, wobei der erste Filter zur Ermittlung eines Zustandes des Objektes ausgeführt ist.

Der erste Filter, der auch als Modul bezeichnet werden kann, schätzt den Systemzustand bei der Fahrt eines Objektes ein, indem er beispielsweise ein Kalman-Filter auf die gemessene Position des Objektes anwendet. Dabei geht man im Falle eines Fahrzeuges davon aus, dass das Objekt Bewegungen nach den Newtonschen Prinzipien ausführt. Um den Systemzustand komplett einzuschätzen, müssen daher die linear zurückgelegte Distanz, die Geschwindigkeit und die Beschleunigung bewertet werden.

Dabei kann der Filter alle bisherigen Werte nehmen, um den nächstfolgenden Wert vorauszusagen. Dies erfolgt jedoch rekursiv durch selbstständige Korrektur eines internen Modells, das die Realität beschreiben sollte. Dabei betrachtet der Filter ein multidimensionales System, in dem die zeitliche Entwicklung eines Prozesses beschrieben werden kann.

Gemäß einem weiteren Ausführungsbeispiel der Erfindung weist die Vorrichtung weiterhin einen zweiten Filter auf, wobei der zweite Filter zur Ermittlung eines Fehlers der gemessenen Position ausgeführt ist.

Dieser Filter, der wie der erste Filter beispielsweise der Auswahl von Kartographieelementen zeitlich vorgeschaltet sein kann, bewertet die Abweichung der gemessenen Position mit Hilfe der beim map matching begangenen Fehler. Dabei kann dieses Modul beispielsweise die GPS-Abweichung mit Hilfe eines Kalman-Filters bewerten. Der Prozesszustand des Kalman-Filters entspricht dabei der Abweichung in Länge und Breite. Mit den bekannten Gleichungen des Kalman-Filters erhält man bei jeder GPS-Positionsschätzung eine neue Bewertung der GPS-Abweichung für die Breite und die Länge.

Gemäß einem weiteren Ausführungsbeispiel der Erfindung weist zumindest einer der Filter die Eigenschaften eines Kalman-Filters auf.

Gemäß einem weiteren Ausführungsbeispiel der Erfindung ist ein System zum Abgleich einer gemessenen Position eines Objektes mit Information einer digitalen Karte für ein Fahrzeug angegeben, wobei das System eine Vorrichtung gemäß einem der vorherigen Ausführungsbeispiele und einem Satellitennavigationsempfänger aufweist.

Dieses System kann beispielsweise in Fahrzeugen zur genaueren und vorhersagenden Positionsbestimmung oder Positionskorrekturbestimmung verwendet werden. Dies kann erhebliche Vorteile für die Absetzung eines automatischen Notrufs (ECall) sowie eines automatisierten technischen Serviceufs (BCall) verwendet werden, aber auch für Fahrerassistenzsysteme (Advanced Driver Assistance System, ADAS).

Gemäß einem weiteren Ausführungsbeispiel der Erfindung ist die Verwendung einer Vorrichtung nach einem der vorhergehenden Ausführungsbeispiele in einem Fahrzeug angegeben.

Gemäß einem weiteren Ausführungsbeispiel der Erfindung ist ein Fahrzeug mit einer Vorrichtung nach einem der vorherigen Ausführungsbeispiele angegeben.

Bei dem Fahrzeug handelt es sich beispielsweise um ein Kraftfahrzeug, wie Auto, Bus oder Lastkraftwagen oder aber auch um ein Schienenfahrzeug, ein Schiff, ein Luftfahrzeug, sowie Helikopter oder Flugzeug oder beispielsweise um ein Fahrrad. Dabei gilt dieses und jedes weitere Ausführungsbeispiel der Erfindung sowohl für einen automatisierten Notruf (ECall) sowie auch für einen automatisierten technischen Serviceruf (breakdown-call, BCall) oder für Fahrerassistenzsysteme (Advanced Driver Assistance System, ADAS).

Gemäß einem weiteren Ausführungsbeispiel der Erfindung ist ein Verfahren zum Abgleich einer gemessenen Position eines Objektes mit Information einer digitalen Karte angegeben, wobei das Verfahren die folgenden Schritte aufweist: Bereitstellung einer Recheneinheit, Durchführung einer Auswahl von Kartographieelementen der Karte auf Basis der gemessenen Position und auf Basis eines vordefinierten Fehlers durch die Recheneinheit sowie die Bereitstellung der ausgewählten Kartographieelemente an eine und eine zweite Unterrecheneinheit durch die Recheneinheit.

Gemäß einem weiteren Ausführungsbeispiel der Erfindung ist ein Programmelement angegeben, das, wenn es auf einem Prozessor ausgeführt wird, den Prozessor anleitet, die oben angegebenen Schritte durchzuführen.

Gemäß einem weiteren Ausführungsbeispiel der Erfindung ist ein Medium angegeben, wobei das Medium das Programmelement für ein Download bereitstellt. Dabei ist das Programmelement weiterhin geeignet, wenn es auf einem Prozessor ausgeführt wird, den Prozessor anleitet, die oben angegebenen Schritte durchzuführen.

Ebenso ist es möglich, dass ein bestehendes Programmelement mittels eines Downloads in den Zustand versetzt wird, dass, wenn es auf einem Prozessor ausgeführt wird, den Prozessor anleitet, die oben angegebenen Schritte durchzuführen.

Gemäß einem weiteren Ausführungsbeispiel der Erfindung ist ein computerlesbares Medium angegeben, wobei auf dem computerlesbaren Medium ein Programmelement gespeichert ist, das, wenn es auf einem Prozessor ausgeführt wird, den Prozessor anleitet, die oben angegebenen Schritte durchzuführen.

Eine grundsätzliche Überlegung der Erfindung ist darin zu sehen, dass die Vorrichtung eine schnelle Vorauswahl von Kartographieelementen der digitalen Karte vornimmt, um anschließend eine parallele Berechnung der ausgewählten Kartographieelemente mittels verschiedener Methoden vornimmt, wobei diese Methoden alle gleiche Maßeinheiten liefern. Eine anschließende Bewertung der Ergebnisse führt dann zu einer optimalen map matching Entscheidung. Dabei kann wesentliche Zeit und Rechenleistung eingespart werden.

Im Folgenden werden mit Verweis auf die Figuren bevorzugte Ausführungsbeispiele der Erfindung beschrieben.

Fig. 1 zeigt eine schematische Darstellung einer Vorrichtung gemäß einem Ausführungsbeispiel der Erfindung.

Fig. 2 zeigt eine schematische Darstellung einer digitalen Karte für eine Vorrichtung gemäß einem Ausführungsbeispiel der Erfindung.

Fig. 3 zeigt einen induzierten Fehler bei einer Berechnung in einer Recheneinheit gemäß einem Ausführungsbeispiel der Erfindung.

Fig. 4 zeigt eine schematische Darstellung der Auswahl von Kartographieelementen gemäß einem Ausführungsbeispiel der vorliegenden Erfindung.

Fig. 5 zeigt eine schematische Darstellung einer Berechnung durch eine Unterrecheneinheit gemäß einem Ausführungsbeispiel der Erfindung.

Fig. 6 zeigt eine schematische Darstellung einer Berechnung durch ein Straßendistanzmodul gemäß einem Ausführungsbeispiel der Erfindung.

Fig. 7 zeigt eine schematische Darstellung eines Flussdiagramms eines Verfahrens gemäß einem weiteren Ausführungsbeispiel der Erfindung.

Die Darstellungen in den Figuren sind schematisch und nicht maßstäblich.

In den folgenden Figurenbeschreibungen werden für die gleichen oder ähnlichen Elemente die gleichen Bezugsziffern verwendet.

Fig. 1 zeigt eine Vorrichtung 100 zum Abgleich einer gemessenen Position 101 eines Objektes mit Information einer digitalen Karte 102. Die Information der Karte kann beispielsweise durch Kartographieelemente und damit korrespondierende Daten gegeben sein. Weiterhin ist eine Recheneinheit 103, die auch als Schnellausschlussfilter ausgeführt sein kann, vorgesehen. Dabei stellt die digitale Karte 102 die in ihr gespeicherte Information, wie beispielsweise die Information über Positionen verschiedener Kartographieelemente, der Recheneinheit 103 zur Verfügung. Dies wird durch die Pfeile 130, 131 verdeutlicht. Ebenso kann diese Information direkt an die Unterrecheneinheiten 104, 105, 106, 107 und 108 gegeben werden, was beispielhaft durch den Pfeil 126 gezeigt ist.

Zur Eliminierung von nicht brauchbaren Kartographieelementen führt die Recheneinheit 103 einen mehrerer möglicher Algorithmen aus, der auf Basis der gemessenen Position 101 und auf Basis eines vordefinierten Fehlers die geeigneten Kartographieelemente auswählt. Nach dieser Auswahl wird der reduzierte Datensatz den Unterrecheneinheiten 104, 105, 106, 107 und 108 zur Verfügung gestellt. Dabei berechnet beispielsweise die erste Unterrecheneinheit 104 einen ersten Wert für jedes ausgewählte Kartographieelement mittels einer ersten Methode und die zweite Unterrecheneinheit 105 berechnet einen zweiten Wert für jedes ausgewählte Kartographieelement mittels einer zweiten Methode.

Es ist weiterhin ein erster Filter 109 und ein zweiter Filter 110 gezeigt. Dabei ist der erste Filter 109 zur Ermittlung des Systemzustandes des Objektes eingerichtet und kann beispielsweise im Falle eines Fahrzeuges die Position, die Geschwindigkeit und die Beschleunigung des Fahrzeuges statistisch schätzen. Eine Ausführung dieses Filters als Kalman-Filter ist möglich. Zur Ermittlung dieses Zustandes wird dem Filter 109 die GPS-Position in korrigierter Version 122 zur Verfügung gestellt. Nach Ermittlung des Systemzustandes durch den Filter 109 kann das Ergebnis einzelnen oder mehreren Unterrecheneinheiten zur Verfügung gestellt werden. In dem hier gezeigten Ausführungsbeispiel wird die Unterrecheneinheit 107 sowie die Unterrecheneinheit 104 mit der Information über den aktuellen Systemzustand versorgt.

Der zweite Filter 110, der beispielsweise auch als Kalman-Filter ausgeführt sein kann, dient dazu, in iterativer Art und Weise Fehler der GPS-Position durch beispielsweise ein Schätzverfahren zu eliminieren oder zu minimieren. Dem Filter 110 kann somit die aktuelle gemessene Position des Objekts 101 nach einer möglichen Überprüfung mittels einer Prüfsumme 113 zugeführt werden. Aber auch eine Rückkopplung des Fehlerwertes nach einem erfolgten Abgleich mittels Feedback-Schleife 121 an den zweiten Filter 110 ist möglich.

Dabei wird die aktuelle gemessene Position 110 durch einen Satellitennavigationsempfänger 111 zur Verfügung gestellt. Dabei können beispielsweise NMEA-Dateien zur Kommunikation zwischen Navigationsgeräten verwendet werden 112.

Beide Filter 109 und 110 können mittels stochastischer Zustandsschätzung den Systemzustand oder den Positionsfehler bestimmen, aber auch eine Bereitstellung von Sensordaten beispielsweise eines Fahrzeuges an die beiden Filter oder eine Kombination aus der Verwendung von Sensordaten und der stochastischen Schätzung ist möglich. Eine Kombination der beiden Verfahren kann genutzt werden, um Fehler, die auf fehlerbehafteten Sensordaten beruhen, zu minimieren.

Nachdem jedem der ausgewählten Kartographieelemente mittels der Methoden der einzelnen Unterrecheneinheiten 104 bis 108 pro Unterrecheneinheit je einen Wert zugeordnet wurde, werden diese Werte jedes Kartographieelements zu einem jeweiligen Endwert addiert 114. Diese Endwerte entsprechen der Wahrscheinlichkeit, dass sich das Objekt an der Position des jeweiligen Kartographieelements befindet. Daraufhin kann eine Reihenfolge der Kartographieelemente gemäß ihrer Wahrscheinlichkeit erstellt werden, um zu entscheiden, welche tatsächliche Position für den Abgleich verwendet werden soll. Dies entspricht dem Ziel-Kartographieelement mit seiner geographischen Position 115.

Dabei ist die Vorrichtung 100 der Figur 1 eingerichtet, um das Zielkartographieelement, die neue abgeglichene Position sowie den Fehler der neuen abgeglichenen Position im Vergleich zur ursprünglich gemessenen Position auszugeben 118, 119 und 120. In einem weiteren Schritt wird mittels der neuen abgeglichenen Position und der Bereitstellung der gemessenen Position 125 ein Fehlerwert 117 berechnet. Dieser Fehler kann weiterhin rückkoppelnd dem Offset eliminierenden Filter 110 in einer Feedback-Schleife 121 zur Verfügung gestellt werden, um iterativ eine möglichst genaue abgeglichene Position des Objektes mit erneuten Schritte berechnen.

Dabei ist von besonderer Bedeutung, dass die verschiedenen Methoden der Unterrecheneinheiten bzw. Module unterschiedliche physikalische Parameter und somit unterschiedliche physikalische Maßeinheiten verwenden und zum Inhalt haben und somit nicht direkt miteinander verglichen werden können. Aufgrund der erfindungsgemäßen Umrechnung der verschiedenen Werte in die gleiche Maßeinheit ist ein direkter Vergleich der Wahrscheinlichkeiten der potentiellen Positionen des Fahrzeuges bzw. Positionen der entsprechenden Kartographieelemente möglich.

Dabei kann die erste Unterrecheneinheit 104 beispielsweise die Methode des Straßendistanzmoduls ausführen. Die zweite Unterrecheneinheit 105 kann beispielsweise mittels der Methode eines Speichermoduls Werte der Kartographieelemente berechnen. Die dritte Unterrecheneinheit 106 kann beispielsweise mittels der Methode der Wegewahrscheinlichkeit bzw. mittels eines Größenmoduls die relevanten Kartographieelemente hinsichtlich ihrer Wahrscheinlichkeit abschätzen. Die vierte Unterrecheneinheit 107 kann beispielsweise die Methode eines Winkelmoduls ausführen. Die fünfte Untereinheit 108 hingegen kann beispielsweise die Methode eines Entfernungsmoduls ausführen.

Im Folgenden sollen beispielhaft einzelne Methoden, die in den Unterrecheneinheiten verwendet werden können, vorgestellt werden.

Das Entfernungsmodul berechnet für jedes Kartographieelement eine Punktzahl. Die äquivalente Punktzahl *Pdistance* für einen vorgegebenen Abstand *Dcs* ist einheitlich (Verhältnis eins zu eins), da das Ergebnis dieses Moduls bereits in Metern ausgedrückt wird und Meter hier als Beispiel die einheitliche Maßeinheit darstellt.

$$P_{distance} = D_{cs}$$

Bei dem so genannten Winkelmodul muss analysiert werden, warum ein großer Winkel zwischen der tatsächlichen Strecke und den einzelnen Segmenten der Karte das Segment weniger wahrscheinlich werden lässt. Die Geschwindigkeit ist der Schlüsselfaktor. Je schneller sich der Empfänger oder das Objekt bewegt, umso größeren Einfluss hat ein falscher Winkel. Der extreme Fall tritt dann ein, wenn die Geschwindigkeit gleich null oder sehr gering ist. Dann sollte der Fehlerwinkel aus den beiden folgenden Gründen überhaupt keinen Einfluss haben:

Erstens: Der Streckenvektor, der benötigt wird, um den Winkel zum Segmentvektor zu berechnen, ist nicht sehr stabil, weil seine Start- und Endpunkte sehr eng beieinander liegen. Zweitens: Der Abstandsfehler ist im nächsten Beispiel sehr klein. Das Verhältnis zur Wertung *Pangle*, das durch einen Winkel ausgedrückt wird, ist dann proportional zu dem Fehlerbetrag, den der Winkel im Durchschnitt während des nächsten Zeitintervalls bei der tatsächlichen Geschwindigkeit herbeiführt:

$$P_{angle} = \frac{1}{2} \cdot \sin(\alpha_{cs}) \cdot v \cdot \Delta t$$

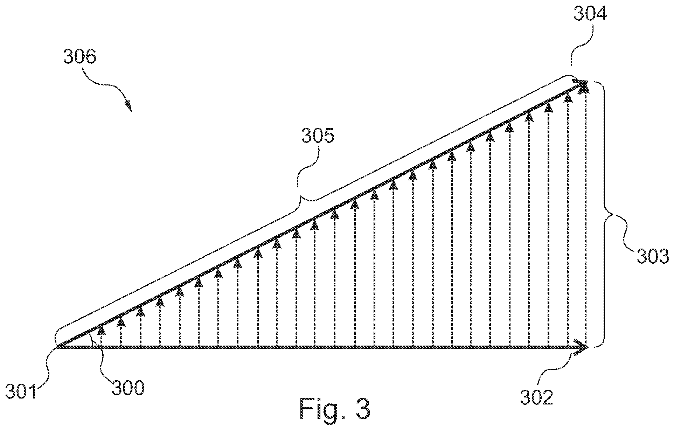

Wobei $\alpha_{cs}$ dem Winkel zwischen dem Streckenvektor und den einzelnen Segmentvektoren, *v* der geschätzten tatsächlichen Geschwindigkeit und $\Delta t$ dem geschätzten Zeitinkrement zwischen der letzten Stichprobe und der nächsten entspricht. Um dies anzuwenden, müssen Geschwindigkeit *v* und Zeitinkrement $\Delta t$ geschätzt werden. Dies kann beispielsweise mit Hilfe eines Kalman-Filters realisiert werden. Graphisch werden diese durchschnittlich induzierten Fehler in Figur 3 dargestellt. Der Durchschnitt einer linearen Abfolge, die bei Null beginnt, entspricht der Hälfte des maximalen Wertes. Der maximale Fehler entspricht $\sin\alpha_{cs} \cdot Basis$ und *Basis* ist gleich $v \cdot \Delta t$.

Für die Anwendung des Map-Matching auf Kraftfahrzeuge, kann es effizienter sein, die Werte der Fahrzeugsensoren abzulesen, wie z.B. des ABS-Systems, die die Genauigkeit der Werte von Abständen und Geschwindigkeiten innerhalb eines kurzen Zeitraums gegenüber denen verbessern könnten, die über einen GPS-Empfänger empfangen werden.

Das Speichermodul berücksichtigt, dass logischerweise die letzte bekannte Straße oder zumindest eine damit verbundene Straße mit größerer Wahrscheinlichkeit doch die aktuelle Straße ist. Das Speichermodul kann sehr stark an die eigenen Bedürfnisse angepasst werden, und es ist möglich, den Memory-Effekt dieses Moduls zu ändern, indem Parameter entsprechend eingestellt werden.

Eine höhere Punktzahl in einem Segment entspricht einer höheren Wahrscheinlichkeit für dieses Segment, das richtige zu sein. Hier wird das Punktesystem im Vergleich zu dem Punktesystem der anderen Module umgekehrt, weil es durch den Benutzer angepasst werden kann und auf diese Weise der Beschreibung einer Wahrscheinlichkeitsverteilungsfunktion entspricht. Aus diesem Grund entspricht das Ergebnis (die Punktzahl) dieses Moduls dieser - umgekehrten - Funktion.

Durch Modifizierung dieser Parameter kann die Form der Funktionen geändert werden, die den Speicher in eine Punktzahl verwandeln. Der Speicher besagt, dass ein Segment vorher ausgewählt worden ist oder dass er direkt mit einem Segment verbunden war.

Das Wege-Wahrscheinlichkeit/Größenmodul sorgt dafür, dass eine größere Straße mit einer höheren Wahrscheinlichkeit bewertet wird, weil erstens auf ihr mehr Fahrzeuge fahren und sie zweitens eine größere Oberfläche besitzt. Was den ersten Punkt betrifft, so hängt die Fahrzeugmenge in einer Straße und daher die entsprechenden Segmente von einer Reihe von Faktoren ab, die schwer zu bestimmen sind. Es wird angenommen, dass diese Fahrzeugmenge sich proportional zu der Größe der Straße verhält. Auf diese Weise wird angenommen, dass die Fahrzeuge gleichmäßig auf der Straße verteilt sind. Hinsichtlich der Größe der Straße entspricht die Wertung $P_{size}$ eines Segments mit der Breite $W_s$ dem maximal möglichen Fehler oder der maximal möglichen Schwankung, d.h.

$$P_{size} = \tfrac{1}{2}\, W_s$$

Diese Punktzahl wird zusammen mit der Punktzahl von dem Speichermodul umgewandelt, bevor sie mit den anderen Punktzahlen verglichen wird, weil die anderen Punktzahlen niedrig sind, wenn sie wahrscheinliche Segmente darstellen, und hoch, wenn sie unwahrscheinliche Segmente darstellen.

Dies bedeutet: je breiter die Straße ist, umso wahrscheinlicher ist sie. Graphisch kann das so dargestellt werden, dass die GPS-Positionen einen tolerierten Fehler aufweisen, welcher der halben Straßenbreite entspricht. Dies stellt eine Rückkopplung der Unterrecheneinheiten an den zweiten Filter 110 dar.

Das Straße-Entfernung-Modul liefert ein Ergebnis $S_d$, welches bereits in Metern ausgedrückt ist. Deshalb ist die Umwandlung in eine Wertung $Pstreet$ einfach:

$$Pstreet = |\,\widetilde{S}_d - S_d\,|$$

Wobei $\widetilde{S}_d$ der Schätzung der auf der Straße zurückgelegten Entfernung entspricht, zum Beispiel berechnet mit dem Zustand eines Kalman-Filters.

Wenn das Map-Matching auf Kraftfahrzeuge anzuwenden ist, wird auch hier wieder die Genauigkeit verbessert, indem anstatt der Schätzung $\widetilde{S}_d$ die zurückgelegte

Entfernung herangezogen wird, die von einem Fahrzeugsensor berechnet wurde. In diesem Fall handelt es sich nicht um einen abgeleiteten Wert und die Genauigkeit ist bei diesen kleinen Entfernungen wesentlich höher als der geschätzte Wert der GPS-Daten.

Bei dem Straßendistanzmodul oder Straße-Entfernungs-Modul handelt es sich um eine komplett neue Methode des Map-Matching. Ein Kalman-Filter wird eingesetzt, um den aktuellen Bewegungszustand und die in der Straße zurückgelegte Entfernung einzuschätzen. Dieses Modul entspricht einem vollständig unabhängigen Map-Matching, das die weiteren Unterrecheneinheiten und Methoden nicht benötigt. Für diese Aufgabe bedarf es lediglich eines Startpunkts und eines speziellen Entscheidungsmoduls für Zweifelsfälle. Kombiniert man dieses Modul mit den anderen Modulen, so ist diese Notwendigkeit bereits durch alle anderen Module abgedeckt.

Alle anderen Module versuchen, die Position quer zur Straßenrichtung zu korrigieren. Dieses Modul nimmt eine Schätzung in Längsrichtung vor und ermittelt die Position durch Längsprojektion der zurückgelegten Strecke in der derzeitigen Straße. Das bedeutet, dass die zurückgelegte Entfernung ermittelt wird und alle möglichen Positionen in der Straße gesucht werden, die dieser Entfernung entsprechen. Ausgehend von diesen Positionen folgt es allen möglichen Straßenrichtungen und gibt die Entfernung dazu an.

So kann man mit der Vorrichtung arbeiten und Daten abgleichen, auch wenn der Betrieb des GPS-Empfängers unterbrochen ist, weil z.B. das Signal in einem Tunnel oder unter einer Brücke abgerissen ist. Dieses Modul kann auch ohne GPS-Informationen eine Entscheidung treffen, wenn während dieser Zeit ohne Verbindung keine anderen Straßen kreuzen, was normalerweise in Tunnels gilt. Daher bietet dieses Modul dem System die Möglichkeit einer "Koppelnavigation" (auch Dead Reckoning genannt). Dies ist ein weitere wesentlicher Vorteil der Erfindung.

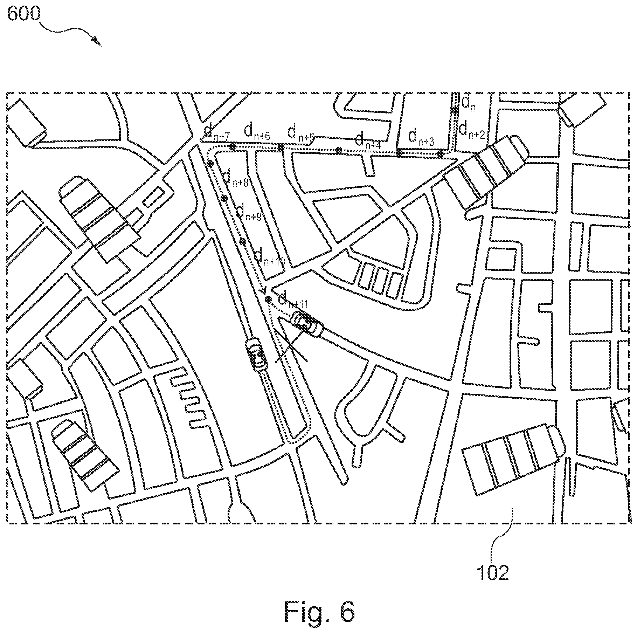

Ein Beispiel dafür, wie dieses Modul zwei mögliche Positionen abwägt, ist in Figur 6 dargestellt. Darin stellen die beiden gezeichneten Fahrzeuge die beiden möglichen Positionen dar und $\bar{d}_{n+11}$ entspricht der Schätzung der nächsten zurückgelegten Entfernung. Dieses Modul ist rechnerisch komplex, weil der minimale Abstand zu jedem möglichen Straßenpunkt rückwärts zu berechnen ist, denn von einem Punkt A zu einem anderen Punkt B können verschiedene Wege existieren und alle müssen analysiert werden. Die Berechnung der geschätzten zurückgelegten Entfernung erfolgt nun beispielsweise mit einem Kalman-Filter. Wenn das Map-Matching jedoch bei Kraftfahrzeugen eingesetzt wird, kann sich die Genauigkeit durch dieses Modul erheblich erhöhen, weil die Fahrzeugsensoren zur Schätzung dieser zurückgelegten Entfernung verwendet werden können und nicht die abgeleiteten Informationen vom GPS, wie beim Kalman-Filter. Ein weiterer Kalman-Filter, der Fahrzeugsensoren verwendet, sollte dann implementiert werden, um diese zurückgelegten Strecken zu berechnen.

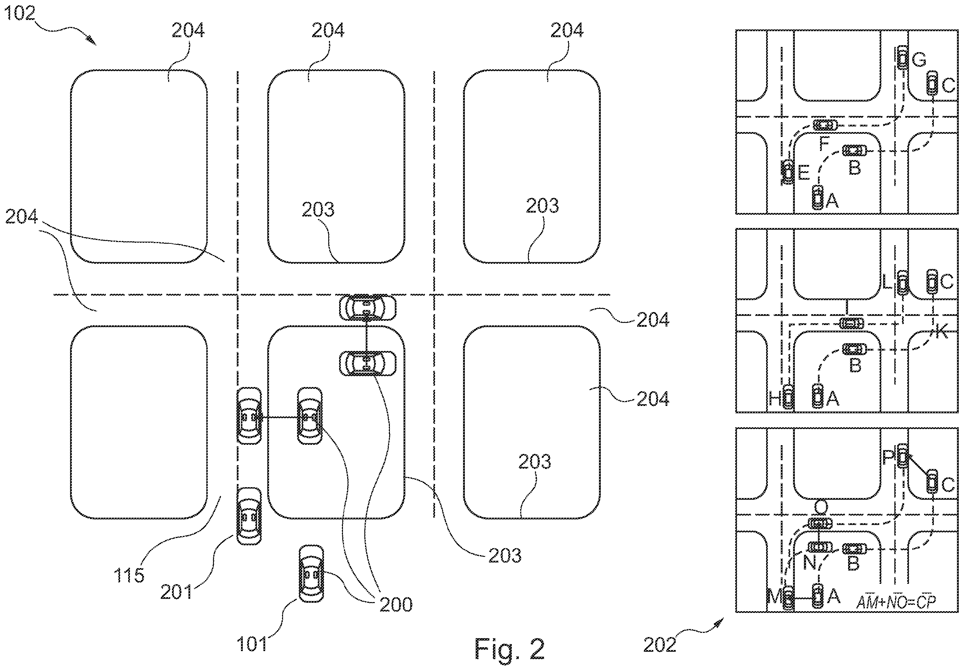

Fig. 2 zeigt eine digitale Karte 102, in der eine gemessene Position eines Fahrzeuges 101 gezeigt ist, die mit der Infrastruktur der gezeigten Karte nicht übereinstimmen kann. Das Fahrzeug 200 befindet sich laut gemessenen Positionen innerhalb eines Gebäudes 203. In dieser Situation kann die erfindungsgemäße Vorrichtung und das erfindungsgemäße Verfahren mittels der Schnellausschlussfilterfunktion und mittels der Kombination verschiedener Methoden zur Berechnung und Bewertung der verschiedenen Kartographieelemente die tatsächliche Position des Fahrzeuges bestimmen. Dabei kann die genaue Bestimmung auch iterativ und mit einer Regelschleife erfolgen. Weiterhin sind beispielhafte Kartographieelemente 204, Straßen und Gebäude gezeigt.

Dabei zeigt Fig. 2 weiterhin die neue abgeglichene Position 201, nachdem das Zielkartographieelement 115 ausgewählt wurde. Dies entspricht der neuen abgeglichenen Position des Fahrzeuges 201. Weiterhin zeigt Fig. 2 eine mögliche Berechnung der neuen abgeglichenen Position 202 mittels vektorieller Darstellung von Segmenten und zurückgelegten Strecken des Fahrzeuges.

Fig. 3 zeigt den induzierten Fehler im Falle, dass die Unterrecheneinheit die Methode eines Winkelmoduls ausführt. Ausgehend von einer aktuellen Position 301 einer Segment- bzw. Straßenrichtung 302 und der aktuellen Strecke des Fahrzeuges 304 kann der Wert $v \Delta T$ 305 wie gezeigt dargestellt werden. Dabei ist ein Winkel zwischen dem Straßenvektor und dem Segmentvektor 300 angezeigt. Der induzierte Fehler 303 während des nächsten Zeitintervalls ist dabei am rechten Bildrand als Höhe des Dreiecks gezeigt.

Fig. 4 zeigt eine graphische Darstellung der Funktion des Schnellausschlussfilters bzw. der Recheneinheit Dabei ist die Recheneinheit zu einer ersten Auswahl von Kartographieelementen der Karte auf Basis der gemessenen Position und auf Basis eines vordefinierten Fehlers ausgeführt. Mit anderen Worten ist der Algorithmus 400 zum schnellen Ausschluss von Segmenten bzw. Elementen einer Karte gezeigt. Dabei ist eine quadratische Fläche 402 mit den Grenzen 401 gezeigt. Der maximale Fehler Dmax 403, der als Radius eines Kreises gezeigt ist, beschreibt die Fläche um die gemessene Position 101, in der die zulässigen Segmente liegen dürfen. Dabei sind Segmente, die korrekt aussortiert wurden 404, sowie Segmente, die nicht aussortiert wurden, obwohl sie nicht die ideale Filterbedingung des maximalen Abstandes Dmax erfüllen 405, gezeigt. Korrekterweise nicht aussortierte Segmente 406 sind ebenso dargestellt. Dabei sei noch mal darauf hingewiesen, dass unter dem Begriff des Kartographieelements sowohl Knoten, Segmente, Wege als auch geschlossene Wege gemeint sind.

Fig. 4 zeigt somit eine graphische Darstellung der Funktionsweise einer beispielhaften Ausführungsform der Recheneinheit bzw. des Schnellausschlussfilters hinsichtlich der ersten Auswahl. Es handelt sich dabei um einen beispielhaften Algorithmus der Recheneinheit. Dieser Schnellausschlussfilter wird benötigt, um alle Module oder Unterrecheneinheiten gleichzeitig abwägen zu können. Es ist ein relativ komplexer Vorgang, die Segmente innerhalb eines maximalen Radius auszuwählen. Die zulässige Fläche dieser Auswahl ist idealerweise ein Kreis. Hierbei muss jedoch berechnet werden, ob sich die Segmente beispielsweise nach der folgenden komplexen Formel innerhalb des maximalen Fehlers befinden:

$$D_{max} \geq \sqrt{d_x^2 + d_y^2} = \sqrt{(p_x - c_x)^2 + (p_y - c_y)^2}$$

(es sei angemerkt, dass sich die Wurzelfunktion im obiger Formel jeweils auf den ganzen Ausdruck bezieht) wobei *Dmax* dem maximalen Radius[11] entspricht, $\vec{C} = (c_x, c_y)$ den Koordinaten des Kreismittelpunktes und in diesem Fall den Koordinaten der empfangenen GPS-Position, $\vec{P} = (p_x, p_y)$ den Koordinaten des Kartographieelements und $CP = (d_x, d_y)$ den Koordinatenunterschieden zwischen diesen den beiden zuletzt genannten Elementen.

Die rechnerische Komplexität ist noch höher, wenn es sich bei den Kartographieelementen um Segmente handelt, weil der kürzeste Abstand zu der Linie berechnet werden muss, die von den beiden Enden des Segments gebildet wird, indem der Mittelpunkt auf diese Linie projiziert und dann bewertet wird, ob sich diese Projektion innerhalb des Segments befindet. Wenn das nicht der Fall ist, entspricht der Mindestabstand dem Abstand zum nächstliegenden Segmentende.

Die Berechnung der Segmente innerhalb eines maximalen Abstands ist kompliziert, doch dieses Modul führt genau das Gegenteil davon aus. Es sucht nicht nach gültigen Segmenten, weil dies eine erschöpfende Suche erfordern würde, sondern sucht nach allen ungültigen Segmenten, die einfach aussortiert werden können. Anders ausgedrückt: es ist schwierig, die Segmente innerhalb eines maximalem Abstands zu berechnen, ohne einige Segmente, die über diesen Abstand hinausgehen, auszusortieren. Auf diese Art und Weise muss die Suche nicht erschöpfend sein, weil die einzige Schwierigkeit darin besteht, dass ein weit entferntes Segment nicht aussortiert würde. Durch diesen neuen Gedanken wird die bestmögliche Filterung erzielt, ohne die Berechnungen noch komplexer zu machen. Dies bedeutet, dass zusätzlich Elemente zur Verfügung stehen, die hätten aussortiert werden können und folgender Formel entsprechen:

$$\Delta \varepsilon_1 = \sim 2\%$$

Eine weitere zulässige Annäherung ist, die Form des maximalen Abstandes, die idealerweise ein Kreis ist, in ein Quadrat zu verwandeln. Dies macht einen linearen Vergleich der Entfernungen möglich.

Das bedeutet, dass die folgende Menge an Elementen nicht gefiltert wird, die hätte aussortiert werden können, wenn eine ideale Kreisform verwendet worden wäre:

$$\Delta \in_2 = \frac{UsedSurface - IdealSurface}{UsedSurfac} = \frac{(2 \cdot d)^2 - \pi \cdot d^2}{(2 \cdot d)^2} = \frac{(4 - \pi) \cdot d^2}{4 \cdot d^2} = \frac{4 - \pi}{4} = 21,46\%$$

Auf diese Art und Weise hätten 21,46% der zulässigen Segmente durch Verwendung eines Filters ausgesondert werden können, wenn der Filter in der Lage ist, die Elemente innerhalb eines Kreises auszuwählen. Dies wäre aber ein ganzheitlicher Filter mit einer viel komplexeren Rechenmethode gewesen.

Die Gesamtmenge der durch diesen Filter zum schnellen Ausschluss von Elementen zugelassenen Segmente, die mit einem komplexeren und ganzheitlichen Filter hätten eliminiert werden können, entspricht schließlich:

$$\Delta \in_{total} = \Delta \in_1 + \Delta \in_2 = \sim 23,46\%$$

Um diese Menge an fälschlicherweise zulässigen Segmenten zu reduzieren und es den Modulen zu erlauben, nur die Segmente in dem Kreis zu bewerten, kann ein zweiter Filter für die gefilterten Elemente verwendet werden. Dies bedeutet, dass nur die gefilterten Elemente (Elemente innerhalb des Quadrats) erneut mit einem ganzheitlichen Filter gefiltert werden (wobei nur die Elemente im Kreis ausgewählt werden). Bei einer quadratischen Fläche ist es möglich, vier verschiedene Grenzen zu setzen: $H^+$, $H^-$, $V^+$ und $V^-$.

Dann ist es möglich, ein generisches Segment $S_{ab}$ auszusortieren, das von den *Knoten* $\vec{a}$ = $(a_x, a_y)$ zu $\vec{b}$ = $(b_x, b_y)$ geht, wenn eine der folgenden Bedingungen zutrifft:

- $a_x > V^+$ und $b_x > V^+$

- $a_x < V^-$ und $b_x < V^-$

- $a_y > H^+$ und $b_y > H^+$

- $a_y < H^-$ und $b_y < H^-$

Diese beispielhafte Filtermethode zum schnellen Ausschluss von Kartographieelementen ist in Figur 4 graphisch verdeutlicht.

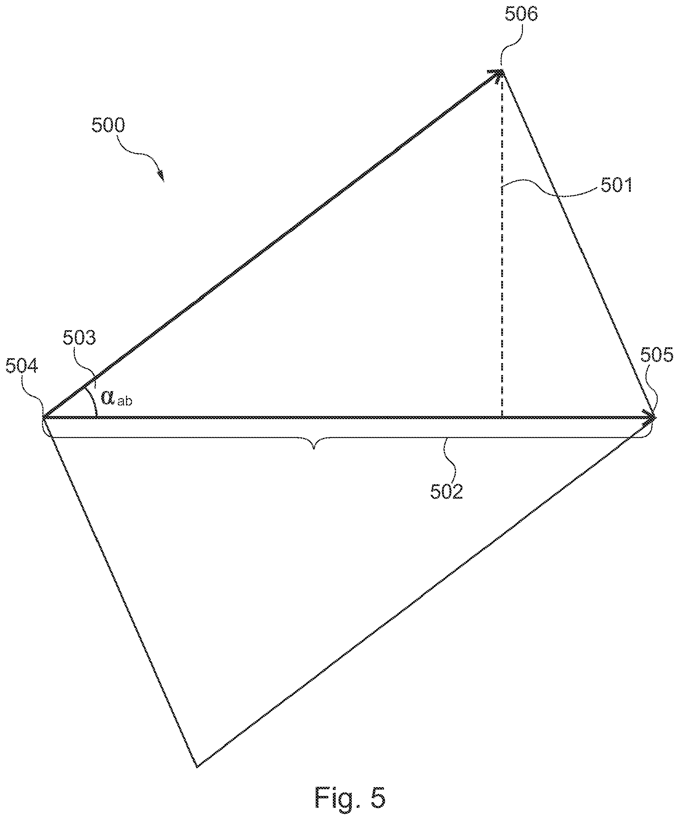

Fig. 5 zeigt ein äquivalentes Parallelogramm 500 zur Berechnung durch das Entfernungsmodul. Diese Berechnung beispielsweise in den Unterrecheneinheiten 104 bis 108 der Fig. 1 ausgeführt werden. Es ist dabei die Höhe 501, die Basis 502, der Winkel 503, P1 mit 504, P2 mit 505 und C mit 506 bezeichnet.

Fig. 6 ist eine schematische Darstellung einer digitalen Karte 102, in der die Berechnung durch ein Straßendistanzmodul 600 dargestellt ist.

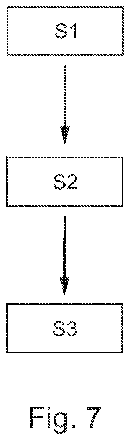

Fig. 7 ist eine schematische Darstellung eines Flussdiagramms, welches ein Verfahren abbildet gemäß einem Ausführungsbeispiel der Erfindung. In Schritt S 1 wird eine Recheneinheit bereitgestellt. In Schritt S2 wird eine Auswahl von Kartographieelementen der Karte auf Basis der gemessenen Position und auf Basis eines vordefinierten Fehlers durch die Recheneinheit ausgeführt. Der Schritt S3 stellt eine Bereitstellung der ausgewählten Kartographieelemente an eine erste und eine zweite Unterrecheneinheit durch die Recheneinheit dar.

Ergänzend sei darauf hingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

Liste der Bezugszeichen

| 100 | Vorrichtung |
| 101 | gemessene Position |
| 102 | digitale Karte |
| 103 | Recheneinheit |

| | |
|---|---|
| 104 | erste Unterrecheneinheit |
| 105 | zweite Unterrecheneinheit |
| 106 | dritte Unterrecheneinheit |
| 107 | vierte Unterrecheneinheit |
| 108 | fünfte Unterrecheneinheit |
| 109 | erster Filter |
| 110 | zweiter Filter |
| 111 | Satellitennavigationsempfänger |
| 112 | Datei mit definiertem Format zur Kommunikation zwischen Navigationsgeräten |
| 113 | Prüfsumme |
| 114 | Addition der ersten bis fünften Werte jedes Kartographieelements zu einem jeweiligen Endwert |
| 115 | Auswahl des wahrscheinlichsten Kartographieelements als Zielkartographieelement |
| 116 | Abgleich / Berechnung der neuen, abgeglichenen Position |
| 117 | Fehlerwert |
| 118 | Ausgabe des Zielkartographieelements |
| 119 | Ausgabe der neuen, abgeglichenen Position |
| 120 | Ausgabe des Fehlerwerts der neuen, abgeglichenen Position |
| 121 | Rückkopplung des Fehlerwerts mittels Feedbackschleife |
| 122 | korrigierte Position |
| 123 | Fehler der berechneten Position |
| 124 | Rückkopplung der neuen abgeglichenen Position mit der Recheneinheit |
| 125 | Bereitstellung der gemessenen Position für die Fehlerberechnung |
| 126 | direkte Bereitstellung von Information an Unterrecheneinheit |
| 130 | Pfeil |
| 131 | Pfeil |
| 200 | Fahrzeug |
| 201 | neue abgeglichene Position |
| 202 | mögliche Berechnung der neuen, abgeglichenen Position |
| 203 | Gebäude |
| 204 | Beispielhaftes Kartographieelement |
| 300 | Winkel zwischen dem Streckenvektor und dem Segmentvektor |
| 301 | aktuelle Position |
| 302 | Segment-/Straßenrichtung |
| 303 | induzierter Fehler |
| 304 | aktuelle Strecke |
| 305 | $v\,\Delta t$ |
| 306 | induzierter Fehler in einem Zeitintervall bei der Berechnung durch das Winkelmodul |
| 400 | Algorithmus zum schnellen Ausschluss von Segmenten/Elementen |
| 401 | Grenzen einer quadratischen Fläche |
| 402 | quadratische Fläche |
| 403 | maximaler Fehler Dmax |
| 404 | Segmente/ Kartographieelemente, die korrekt aussortiert werden |
| 405 | Segmente/ Kartographieelemente, die nicht aussortiert werden, obwohl sie nicht die ideale Filterbedingung des maximalen Abstandes Dmax erfüllen |
| 406 | korrekterweise nicht aussortierte Segmente/ Kartographieelemente |
| 500 | äquivalentes Parallelogramm zur Berechung durch das Entfernungsmodul |
| 501 | Höhe |
| 502 | Basis |
| 503 | Winkel |
| 504 | P1 |
| 505 | P2 |
| 506 | C |
| 600 | Berechnung durch das Straßendistanzmodul |

**Patentansprüche**

**1.** Vorrichtung (100) zum Abgleich einer gemessenen Position (101) eines Objektes mit Information einer digitalen Karte (102), die Vorrichtung aufweisend:

eine Recheneinheit (103); eine erste (104) und eine zweite (105) Unterrecheneinheit; wobei die Recheneinheit zu einer ersten Auswahl von Kartographieelementen (404, 405, 406) der Karte auf Basis der gemessenen Position und auf Basis eines vordefinierten Fehlers (403) ausgeführt ist;
wobei die Recheneinheit weiterhin zur Bereitstellung der ausgewählten Kartographieelemente an die erste (104) und die zweite (105) Unterrecheneinheit ausgeführt ist,

**dadurch gekennzeichnet,**
**dass** die erste und die zweite Unterrecheneinheit so eingerichtet sind, dass sie eine gleichzeitige Abwägung und Bewertung der Kartographieelemente mittels gleichzeitig, parallel und voneinander unabhängig arbeitenden Map-Matching-Algorithmen ausführen.

2. Vorrichtung gemäß Anspruch 1 wobei die erste Unterrecheneinheit zur Berechnung eines ersten Wertes für jedes ausgewählte Kartographieelement mittels einer ersten Methode ausgeführt ist;
wobei die zweite Unterrecheneinheit zur Berechnung eines zweiten Wertes für jedes ausgewählte Kartographieelement mittels einer zweiten Methode ausgeführt ist; und
wobei die ersten und die zweiten Werte in der gleichen Maßeinheit berechnet sind.

3. Vorrichtung gemäß Anspruch 2, wobei die Vorrichtung weiterhin zur Addition des ersten und des zweiten Wertes jedes ausgewählten Kartographieelements zu einem jeweiligen Endwert ausgeführt ist.

4. Vorrichtung gemäß einem der vorherigen Ansprüche,
wobei die Vorrichtung weiterhin zu einer Bewertung der ersten Unterrecheneinheit und einer Bewertung der zweiten Unterrecheneinheit ausgeführt ist, was zu einer entsprechenden Gewichtung der beiden Werte jedes ausgewählten Kartographieelements führt.

5. Vorrichtung gemäß einem Ansprüche 3 oder 4,
wobei die Vorrichtung weiterhin zu einer zweiten Auswahl eines Zielkartographieelements (115) aus den ausgewählten Kartographieelementen auf Basis der Endwerte ausgeführt ist; und
wobei die Vorrichtung weiterhin derart ausgeführt ist, dass der Abgleich auf Basis des Zielkartographieelements erfolgt.

6. Vorrichtung gemäß einem der vorherigen Ansprüche, die Vorrichtung weiterhin aufweisend:

einen ersten Filter (109);
wobei der erste Filter zur Ermittlung eines Zustandes des Objektes ausgeführt ist.

7. Vorrichtung gemäß einem der vorherigen Ansprüche, die Vorrichtung weiterhin aufweisend:

einen zweiten Filter (110);
wobei der zweite Filter zur Ermittlung eines Fehlers der gemessenen Position des Objektes ausgeführt ist.

8. Vorrichtung gemäß einem der Ansprüche 6 oder 7,
wobei zumindest einer der Filter als Kalman-Filter ausgeführt ist.

9. System zum Abgleich einer gemessenen Position eines Objektes mit Information einer digitalen Karte für ein Fahrzeug, das System aufweisend:

einen Satellitennavigationsempfänger (111), wobei das System **gekennzeichnet ist durch**:

eine Vorrichtung gemäß einem der vorherigen Ansprüche.

10. Verwendung einer Vorrichtung nach einem der Ansprüche 1 bis 8 in einem Fahrzeug (200).

11. Fahrzeug (200) mit einer Vorrichtung nach einem der Ansprüche 1 bis 8.

12. Verfahren zum Abgleich einer gemessenen Position eines Objektes mit Information einer digitalen Karte, das Verfahren aufweisend die folgenden Schritte:

Bereitstellung einer Recheneinheit (S1);
Auswahl von Kartographieelementen der Karte auf Basis der gemessenen Position und auf Basis eines vordefinierten Fehlers durch die Recheneinheit (S2);
Bereitstellung der ausgewählten Kartographieelemente an eine erste und eine zweite Unterrecheneinheit durch die Recheneinheit (S3),

**dadurch gekennzeichnet,**
**dass** die erste und die zweite Unterrecheneinheit eine gleichzeitige Abwägung und Bewertung der Kartographieelemente mittels gleichzeitig, parallel und voneinander unabhängig arbeitenden Map-Matching-Algorithmen ausführen.

13. Programmelement, das, wenn es auf einem Prozessor ausgeführt wird, den Prozessor anleitet, die folgenden Schritte durchzuführen:

Bereitstellung einer Recheneinheit;
Auswahl von Kartographieelementen der Karte auf Basis der gemessenen Position und auf Basis eines vordefinierten Fehlers durch die Recheneinheit;
Bereitstellung der ausgewählten Kartographieelemente an eine erste und eine zweite Unterrecheneinheit durch die Recheneinheit,
**gekennzeichnet durch** den Schritt:

gleichzeitige Abwägung und Bewertung der Kartographieelemente **durch** die erste und die zweite Unterrecheneinheit mittels gleichzeitig, parallel und voneinander unabhängig arbeitenden Map-Matching-Algorithmen.

14. Computerlesbares Medium, auf dem ein Programmelement gespeichert ist, das, wenn es auf einem Prozessor ausgeführt wird, den Prozessor anleitet, die folgenden Schritte durchzuführen:

Bereitstellung einer Recheneinheit;
Auswahl von Kartographieelementen der Karte auf Basis der gemessenen Position und auf Basis eines vordefinierten Fehlers durch die Recheneinheit;
Bereitstellung der ausgewählten Kartographieelemente an eine erste und eine zweite Unterrecheneinheit durch die Recheneinheit,
**gekennzeichnet durch** den Schritt:

gleichzeitige Abwägung und Bewertung der Kartographieelemente **durch** die erste und die zweite Unterrecheneinheit mittels gleichzeitig, parallel und voneinander unabhängig arbeitenden Map-Matching-Algorithmen.

## Claims

1. A device (100) for matching a measured position (101) of an object using information from a digital map (102), said device comprising:

a processing unit (103);
a first sub-processing unit (104) and a second sub-processing unit (105);
wherein the processing unit is designed to perform a first selection of cartography elements (404, 405, 406) of the map on the basis of the measured position and on the basis of a predefined error (403);
wherein the processing unit is further designed to provide the selected cartography elements to the first sub-processing unit (104) and the second sub-processing unit (105),

**characterized in that**
the first and second sub-processing units are set up so that they simultaneously weigh and evaluate the cartography elements by means of map-matching algorithms which operate simultaneously, in parallel and independently of each other.

**2.** The device according to Claim 1,
wherein the first sub-processing unit is designed to calculate a first value for each selected cartography element by means of a first method;
wherein the second sub-processing unit is designed to calculate a second value for each selected cartography element by means of a second method; and
wherein the first and the second values are calculated in the same unit of measurement.

**3.** The device according to Claim 2,
wherein the device is additionally designed to add the first and the second values of each selected cartography element to produce a respective end value.

**4.** The device according to any one of the preceding claims,
wherein the device is further designed to evaluate the first sub-processing unit and evaluate the second sub-processing unit, which results in a corresponding weighting of the two values of each selected cartography element.

**5.** The device according to any one of Claims 3 or 4,
wherein the device is further designed to perform a second selection of a target cartography element (115) from the selected cartography elements on the basis of the end values; and
wherein the device is further designed in such a manner that the matching takes place on the basis of the target cartography element.

**6.** The device according to any one of the preceding claims, said device further comprising:

    a first filter (1 09);
    wherein the first filter is designed to establish a state of the object.

**7.** The device according to any one of the preceding claims, said device further comprising:

    a second filter (110);
    wherein the second filter is designed to establish an error in the measured position of the object.

**8.** A device according to any one of Claims 6 or 7,
wherein at least one of the filters is designed as a Kalman filter.

**9.** A system for matching a measured position of an object using information from a digital map for a vehicle, said system comprising: a satellite navigation receiver (111), wherein the system is **characterized by**:

    a device according to any one of the preceding claims.

**10.** Use of a device according to any one of Claims 1 to 8 in a vehicle (200).

**11.** A vehicle (200) having a device according to any one of Claims 1 to 8.

**12.** A method for matching a measured position of an object using information from a digital map, said method comprising the following steps:

    provision of a processing unit (S1);
    selection of cartography elements of the map on the basis of the measured position and on the basis of a predefined error by the processing unit (S2);
    provision of the selected cartography elements to a first sub-processing unit and a second sub-processing unit by the processing unit (S3),

    **characterized in that**
    the first and second sub-processing units perform a simultaneous weighing and evaluation of the cartography elements by means of map-matching algorithms which operate simultaneously, in parallel and independently of each other.

**13.** A program element which, when it is run on a processor, instructs the processor to perform the following steps:

provision of a processing unit;
selection of cartography elements of the map on the basis of the measured position and on the basis of a predefined error by the processing unit;
provision of the selected cartography elements to a first sub-processing unit and a second sub-processing unit by the processing unit,

**characterized by** the step:

simultaneous weighing and evaluation of the cartography elements by the first and second sub-processing units by means of map-matching algorithms which operate simultaneously, in parallel and independently of each other.

14. A computer-readable medium, on which a program element is stored,
which, when it is run on a processor, instructs the processor to perform the following steps:

provision of a processing unit;
selection of cartography elements of the map on the basis of the measured position and on the basis of a predefined error by the processing unit;
provision of the selected cartography elements to a first sub-processing unit and a second sub-processing unit by the processing unit,

**characterized by** the step:

simultaneous weighing and evaluation of the cartography elements by the first and second sub-processing units by means of map-matching algorithms which operate simultaneously, in parallel and independently of each other.

**Revendications**

1. Dispositif (100) destiné à aligner une position mesurée (101) d'un objet avec l'information d'une carte numérique (102), le dispositif présentant :

une unité de calcul (103) ;
une première (104) et une deuxième (105) sous-unité de calcul ;
l'unité de calcul étant réalisée pour une première sélection d'éléments de cartographie (404, 405, 406) de la carte sur la base de la position mesurée et sur la base d'une erreur (403) prédéfinie ;
l'unité de calcul étant également réalisée pour la fourniture des éléments de cartographie sélectionnés à la première (104) et à la deuxième (105) sous-unité de calcul,

**caractérisé en ce que**
la première et la deuxième sous-unité de calcul sont agencées de telle sorte qu'elles réalisent un examen et une analyse simultanés des éléments de cartographie au moyen d'algorithmes de map-matching fonctionnant de façon simultanée, parallèle et indépendamment les uns des autres.

2. Dispositif selon la revendication 1,
la première sous-unité de calcul étant réalisée pour le calcul d'une première valeur pour chaque élément de cartographie sélectionné au moyen d'une première méthode ;
la deuxième sous-unité de calcul étant réalisée pour le calcul d'une deuxième valeur pour chaque élément de cartographie sélectionné au moyen d'une deuxième méthode ; et
les premières et les deuxièmes valeurs étant calculées dans la même unité de mesure.

3. Dispositif selon la revendication 2,
le dispositif étant réalisé également pour l'addition de la première et de la deuxième valeur de chaque élément de cartographie sélectionné pour donner une valeur finale respective.

4. Dispositif selon l'une des revendications précédentes,
le dispositif étant réalisé également pour une évaluation de la première sous-unité de calcul et pour une évaluation de la deuxième sous-unité de calcul, ce qui conduit à une pondération correspondante des deux valeurs de chaque élément de cartographie sélectionné.

**5.** Dispositif selon l'une des revendications 3 ou 4,
le dispositif étant réalisé également pour une deuxième sélection d'un élément de cartographie cible (115) à partir des éléments de cartographie sélectionnés sur la base des valeurs finales ; et
le dispositif étant également réalisé de telle sorte que l'alignement s'effectue sur la base de l'élément de cartographie cible.

**6.** Dispositif selon l'une des revendications précédentes, le dispositif présentant également :

un premier filtre (109) ;
le premier filtre étant réalisé pour la détermination d'un état de l'objet.

**7.** Dispositif selon l'une des revendications précédentes, le dispositif présentant également :

un deuxième filtre (110) ;
le deuxième filtre étant réalisé pour la détermination d'une erreur de la position mesurée de l'objet.

**8.** Dispositif selon l'une des revendications 6 ou 7,
au moins un des filtres étant réalisé en tant que filtre de Kalman.

**9.** Système destiné à aligner une position mesurée d'un objet avec l'information d'une carte numérique pour un véhicule, le système présentant :

un récepteur de navigation par satellite (11), le système étant **caractérisé par** :

un dispositif selon l'une des revendications précédentes.

**10.** Utilisation d'un dispositif selon l'une des revendications 1 à 8 dans un véhicule (200).

**11.** Véhicule (200) avec un dispositif selon l'une des revendications 1 à 8.

**12.** Procédé destiné à aligner une position mesurée d'un objet avec l'information d'une carte numérique, le procédé présentant les étapes suivantes :

fourniture d'une unité de calcul (S1) ;
sélection d'éléments de cartographie de la carte sur la base de la position mesurée et sur la base d'une erreur prédéfinie par l'unité de calcul (S2) ;
fourniture des éléments de cartographie sélectionnés à une première et une deuxième sous-unité de calcul par l'unité de calcul (S3),

**caractérisé en ce que**
la première et la deuxième sous-unité de calcul réalisent un examen et une analyse simultanés des éléments de cartographie au moyen d'algorithmes de map-matching fonctionnant de façon simultanée, parallèle et indépendamment les uns des autres.

**13.** Elément de programme qui, quand il est exécuté sur un processeur, pilote le processeur pour qu'il effectue les étapes suivantes :

fourniture d'une unité de calcul ;
sélection d'éléments de cartographie de la carte sur la base de la position mesurée et sur la base d'une erreur prédéfinie par l'unité de calcul ;
fourniture des éléments de cartographie sélectionnés à une première et une deuxième sous-unité de calcul par l'unité de calcul,

**caractérisé par** l'étape :

examen et analyse simultanés des éléments de cartographie par la première et la deuxième sous-unité de calcul au moyen d'algorithmes de map-matching fonctionnant de façon simultanée, parallèle et indépendamment les uns des autres.

**14.** Support lisible par ordinateur sur lequel est enregistré un élément de programme qui, quand il est exécuté sur un processeur, pilote le processeur pour qu'il effectue les étapes suivantes :

fourniture d'une unité de calcul ;
sélection d'éléments de cartographie de la carte sur la base de la position mesurée et sur la base d'une erreur prédéfinie par l'unité de calcul ;
fourniture des éléments de cartographie sélectionnés à une première et une deuxième sous-unité de calcul par l'unité de calcul,

**caractérisé par** l'étape :

examen et analyse simultanés des éléments de cartographie par la première et la deuxième sous-unité de calcul au moyen d'algorithmes de map-matching fonctionnant de façon simultanée, parallèle et indépendamment les uns des autres.

Fig. 1

EP 2 153 172 B1

Fig. 2

Fig. 3

Fig. 4

Fig. 5

Fig. 6

```
┌─────────────┐
│     S1      │
└─────────────┘
       │
       ▼
┌─────────────┐
│     S2      │
└─────────────┘
       │
       ▼
┌─────────────┐
│     S3      │
└─────────────┘
```

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20060047423 A1
- EP 0522862 A1
- DE 4432208 A1